# EUROPEAN PATENT SPECIFICATION

(11) **EP 3 107 390 B1**
(45) Date of publication and mention of the grant of the patent: **21.07.2021**
(21) Application number: 15706211.8
(22) Date of filing: 19.02.2015
(51) Int. Cl.: A01N 37/46, A01N 43/56, A01N 43/653, A01N 47/24, A01N 25/30, A01N 25/04

(54) **A METHOD FOR PRODUCING AN AQUEOUS CO-FORMULATION OF METALAXYL**
VERFAHREN ZUR HERSTELLUNG EINER WÄSSRIGEN CO-FORMULIERUNG VON METALAXYL
PROCÉDÉ DE PRODUCTION D'UNE COFORMULATION AQUEUSE DE MÉTALAXYL

(30) Priority: 19.02.2014 EP 14155795
(43) Date of publication of application: 28.12.2016
(73) Proprietor: BASF SE, 67056 Ludwigshafen am Rhein (DE)
(72) Inventor: KLAMCZYNSKI, Katharine, 67459 Böhl-Iggelheim (DE); KUHNS, Marco, 67459 Böhl-Iggelheim (DE); KLIMOV, Evgueni, 67071 Ludwigshafen (DE)
(74) Representative: BASF IP Association
(86) International application number: PCT/EP2015/053480
(87) International publication number: WO 2015/124661

(56) References cited:
- WO-A1-2012/090516
- WO-A2-2007/054469
- WO-A2-2011/006896
- WO-A2-2011/012493
- CN-A- 1 864 486
- CN-A- 102 217 610
- US-A1- 2011 195 839

## Description

The present invention relates to a method for producing an aqueous co-formulation of metalaxyl containing at least one further sparingly water-soluble organic pesticide compound PC having a solubility in water of at most 1 g/l at 20°C and a melting point in the range from 40 to 100°C and optionally a further pesticide having a melting point of above 100°C, in particular to a method for producing an aqueous co-formulation of metalaxyl with pyraclostrobin and triticonazol.

### BACKGROUND OF INVENTION

Metalaxyl is a pesticide compound having systemic fungicidal activity. Metalaxyl is the common name of methyl {[(2,6-dimethylphenyl)-methoxyacetyl]amino) propionate (IUPAC). Metalaxyl, in particular its D enantiomer metalaxyl M, is used in foliar and soil applications against a large number of fungal diseases in crop plants caused by air- and soilborne pathogens. Frequently, metalaxyl is used for treating seed, in particular seed of cereals, such as maize and sorghum, legumes, such as peas, and sunflowers.

Due to its physicochemical properties, metalaxyl is usually formulated as a solid formulation, e.g. as a wettable powder WP, as granules GR or as a powder for dry seed treatment (DS formulation). Metalaxyl may also be formulated as an aqueous flowable, in particular for the purpose of seed treatment.

In order to increase its activity spectrum, metalaxyl may be employed together with one or more further pesticides, in particular from the groups of fungicides and insecticides. Usually co-application of metalaxyl with further pesticides is achieved by tank-mixing a formulation of metalaxyl with a formulation of the further pesticide.

WO 2007/054469 describes fungicidal mixtures comprising triticonazol, pyraclostrobin and an acylalanin, such as metalyl-M or kiralaxyl. A co-formulation is not described therein.

CN 102 217 610 A discloses an agrochemical composition containing picooxystrobin and amides selected from any one of the following fungicides: Dimethomorph, Metalaxyl, Metalaxyl, Benalaxyl, Benalaxyl, Fluonamide, Pyrimorph.

WO 2011/006896 A2 discloses a process for preparing an aqueous suspension of an organic pesticide compound, which has a solubility in water of not more than 2 g/l at 20 °C and a melting point of not more than 110 °C and which is capable of forming at least one crystalline modification, wherein the organic pesticide compound is present in the form of essentially crystalline particles. Pyraclostrobin is a particular example of such a pesticide.

For many purposes, in particular for the purpose of seed treatment, it is highly desirable to provide aqueous co-formulations of metalaxyl, in particular metalaxyl M, with further pesticides. However, when trying to co-formulate metalaxyl with an organic pesticide in an aqueous co-formulation, one faces severe problems with regard to formulation stability, if the further pesticide is a low melting pesticide, e.g. a pesticide with a melting point in the range from 40 to 100°C, having a limited water-solubility, e.g. at most 1 g/l at 20°C.

Therefore, there is a strong need for providing aqueous co-formulations of co-formulation of metalaxyl with at least one further sparingly water-soluble organic pesticide compound PC having a solubility in water of at most 1 g/l at 20°C and a melting point in the range from 40 to 100°C, in particular from 45 to 90°C.

### SUMMARY OF INVENTION

It was surprisingly found, that this problem can be overcome by the method as described hereinafter. This method includes providing an aqueous composition of metalaxyl, wherein metalaxyl is essentially present dissolved in an aqueous phase containing water at least one surfactant, and mixing this aqueous composition with an aqueous suspension of the further pesticide compound. Surprisingly, small amounts of undissolved metalaxyl impart instability to aqueous suspensions of a sparingly water-soluble low-melting pesticide, while aqueous suspensions of sparingly water-soluble higher melting pesticides are not affected. It is also surprising that such instability is not observed, when the aqueous suspension of a sparingly water-soluble low-melting pesticide is contacted with another pesticide, in particular with a sparingly water-soluble pesticide having a melting point of above 100°C, which is different from metalaxyl.

Therefore, the present invention relates to a method for producing an aqueous co-formulation of metalaxyl with at least one further sparingly organic pesticide compound PC having a solubility in water of at most 1 g/l at 20°C and a melting point in the range from 40 to 100°C, which method comprises the following steps:
a) providing an aqueous composition of metalaxyl, wherein at least 95% of the metalaxyl contained in the aqueous composition is present dissolved in an aqueous phase containing water at least one surfactant and wherein the concentration of metalaxyl in the aqueous phase is from 0.3 to 10% by weight, based on the weight of the aqueous composition;
b) mixing an aqueous suspension of the organic pesticide compound PC with the aqueous composition of metalaxyl, where the concentration of the organic pesticide PC is from 1 to 50% by weight, based on the weight of the suspension of the organic pesticide PC.

The process of the present invention allows for the first time to produce an aqueous co-formulation of metalaxyl with at least one further sparingly organic pesticide compound PC having a solubility in water of at most 1 g/l at 20°C and a melting point in the range from 40 to 100°C. Therefore, the present invention also relates to such co-formulations.

### DETAILED DESCRIPTION OF INVENTION

Metalaxyl, as used for the purpose of the present invention, includes the D-enantiomer, also termed metalyl-M, the L-enantiomer of metalaxyl and mixture of the D-enantiomer and the L-enantiomer including both racemic and non-racemic mixtures. In a particular embodiment, metalaxyl is used in the form of its D-enantiomer.

In step a) of the process of the present invention, an aqueous composition is provided, wherein the metalaxyl is essentially present dissolved in the aqueous phase. The concentration of metalaxyl in the aqueous phase, is generally from 0.3 to 10%, in particular 0.5 to 5%, especially 0.8 to 3% by weight, based on the total weight of the aqueous composition provided in step a).

Essentially dissolved means that the aqueous phase does not contain noticeable amounts of undissolved metalaxyl. The concentration of undissolved metalaxyl does generally not exceed 0.05% by weight (500 ppm), in particular 0.02% by weight (200 ppm), based on the total weight of the aqueous composition. In particular at least 98%, especially at least 99% of the metalaxyl present in the aqueous composition of step a) are present in dissolved form.

According to the present invention, the aqueous phase contains water and at least one surfactant. The surfactant is usually present in dissolved form. The total concentration of the surfactant in the aqueous composition is generally from 0.5 to 20% by weight, in particular from 1 to 10% by weight, based on the total weight of the composition of step a).

Suitable surfactants include anionic surfactants and non-ionic surfactants and combinations thereof. The surfactants include non-polymeric surfactants which are also termed emulsifiers and polymeric surfactants, which may also termed as protective colloids. In contrast to polymeric surfactants, emulsifiers will generally have a number average molecular weight M_{N} of not more than 1000 Dalton while polymeric surfactants will generally have a number average molecular weight M_{N} of greater than 1000 Dalton. The nature of the surfactants is not particularly critical, e.g. they may be selected from any known dispersing agents and wetting agents. Dispersing agents are those surfactants which primarily bond to the surface of the active ingredient particles/droplets, e.g. by ionic and/or hydrophobic interaction, and which stabilize the particles in the liquid phase. Wetting agents are surfactants which primarily lower the interfacial tension between the liquid phase and the surface of the solid particles of the active ingredient (here, the pesticide compound) that are dispersed or emulsified in the aqueous phase, thereby assisting in stabilizing the particles in the aqueous phase. Wetting agents may be chosen by physical measuring of the contact angle. Particular suitable wetting agents will have a contact angle of less than 90°, in particular less than 60° (determined at 24°C/1013 mbar for a 1 M aqueous solution of the wetting agent according to DIN 53914 by the Wilhelmy method or according to extended Washburn method using a powder of the pesticide compound).

Preferably, the surfactant which is contained in the aqueous composition of step a), comprises at least one anionic surfactant having at lest one sulphate, sulfonate, phosphate, or phosphonate group. Surfactants of this type include but are not limited to the salts, in particular the sodium, potassium, calcium or ammonium salts of
- emulsifiers having an SO₃⁻ or PO₃²⁻ group, e.g.

| | |
|---|---|
| S.1 | C₆-C₂₂-alkylsulfonates such as lauryl sulfonate, isotridecylsulfonate; |
| S.2 | C₆-C₂₂-alkylsulfates such as lauryl sulfate, isotridecylsulfate, cetylsulfate, stearylsulfate; |
| S.3 | aryl- and C₁-C₁₆-alkylarylsulfonates such as naphthylsulfonate, mono-,di- and tri-C₁-C₁₆-alkylnaphthylsulfonates such as dibutylnaphtylsulfonate, dodecyldiphenylether sulfonate, mono-, di- and tri-C₁-C₁₆-alkylphenylsulfonates such as cumylsulfonate, octylbenzene sulfoanate, nonylbenzenesulfonate, dodecylbenzene sulfonate and tridecylbenzene sulfonate; |
| S.4 | sulfates and sulfonates of C₆-C₂₂-fatty acids and C₆-C₂₂-fatty acid esters; |
| S.5 | sulfates of ethoxylated C₆-C₂₂ alkanols such as sulfates of (poly)ethoxylated lauryl alcohol; |
| S.6 | alkylphenol ether sulfates, e.g. the sulphates of (poly)ethoxylated C₄-C₁₆-alkylphenols and the sulphates of (poly)ethoxylated-co-propoxylated C₄-C₁₆-alkylphenols; |
| S.7 | polyaryl ether sulfates, e.g. the sulfates of (poly)ethoxylated di- or tristyrylphenols and the sulfates of (poly)ethoxylated-co-propoxylated di- or tristyrylphenols; |
| S.8 | di C₄-C₁₆ alkylesters of sulfosuccinic acid such as dioctylsulfosuccinate; |
| S.9 | phosphates of ethoxylated C₆-C₂₂ alkanols such as phosphates of (poly)ethoxylated lauryl alcohol; |
| S.10 | alkylphenol ether phosphates, e.g. the phosphate esters of (poly)ethoxylated C₄-C₁₆-alkylphenols and the phosphate esters of (poly)ethoxylated-co-propoxylated C₄-C₁₆-alkylphenols; |
| S.11 | polyaryl ether phosphates, e.g. the phosphate esters of (poly)ethoxylated di- or tristyrylphenols and the phosphate esters of (poly)ethoxylated-co-propoxylated di- or tristyrylphenols; |
| - polymeric anionic surfactants having an SO₃⁻ group, e.g. | |
| S.12 | condensates of arylsulfonic acid, such as naphthalenesulfonic acid or phenolsulfonic acid, with formaldehyde and optionally with urea; |

Preferably the anionic surfactants comprise at least one anionic surfactant selected from the groups of surfactants S.3, S.6, S.7, S.8, S.9, S.10, S.11 and S.12, in particular from the groups S.3, S.6, S.7, S.8, S.9, S.10, S.11 and S.12 and especially from the group S.7, S.11 and S.12. In particular, the anionic surfactants contained in the composition of step a) are selected from the groups of surfactants S.3, S.6, S.7, S.8, S.9, S.10, S.11 and S.12, in particular from the groups S.6, S.7, S.8, S.9, S.10, S.11 and S.12 and especially from the group S.3, S.7, S.11 and S.12.

In the group of surfactants S.3 preference is given to mono- or di-C₄-C₈-alkyl-naphthalene sulfonic acid and mono- or di-C₄-C₁₆-alkylbenzesulfonic acid and the ammonium salts, the alkaline metal salts, such as the sodium or potassium salt, and the earth alkaline metal salts, in particular the calcium salts thereof. Particularly suitable examples are Morwet® EFW (Akzo Nobel), and the like.

In the group of surfactants S.6 preference is given to polyethoxylated mono-C₆-C₁₂-alkylphenol sulfates, in particular of those having from 5 to 50, in particular 10 to 40 ethylenoxide repeating units, such as ethoxylated octylphenol sulfates, ethoxylated nonylphenol sulfates and ethoxylated dodecylphenol sulfates, and the ammonium salts, the alkaline metal salts, such as the sodium or potassium salt, and the earth alkaline metal salts, in particular the ammonium and sodium salts thereof.

In the group of surfactants S.7 preference is given to the ammonium salts, alkaline metal salts and earth alkaline metal salts of sulfates of (poly)ethoxylated di- or tristyrylphenols, in particular of those having from 5 to 50, in particular 10 to 50 or 15 to 50 ethylenoxide repeating units. Particularly suitable examples of sulfates of (poly)ethoxylated di- or tristyrylphenols are Soprophor® 4D384 from Rhodia and the like.

In the group of surfactants S.8 preference is given to the ammonium salts and the alkaline metal salts of di(C₆-C₁₂ alkyl) sulfosuccinates, C₆-C₁₂ alkyl being a straight chain or branched alkyl group of from 6 to 12 carbon atoms, e.g. n-hexyl, n-heptyl, n-octyl, n-nonyl, n-decyl, n-dodecyl, 2-hexyl, 2-heptyl, 2-octyl, 2-nonyl and 2-ethyl hexyl. Preferably, an alkaline metal dioctyl sulfosuccinate is employed, wherein the octyl moiety may be linear or branched and wherein the alkaline metal being selected from sodium and potassium. A particularly suitable example is Aerosol® OTB (Cytec), and the like.

In the group of surfactants S.11 preference is given to the ammonium salts and alkaline metal salts of phosphates of (poly)ethoxylated di- or tristyrylphenols, in particular of those having from 5 to 50, in particular 10 to 50 or 15 to 50 ethylene oxide repeating units.

In the group of surfactants S.12, the aryl sulfonic acid may be e.g. phenol sulfonic acid or naphthalene sulfonic acid which is unsubstituted or substituted by one or more, e.g. 1, 2, 3 or 4, C₁-C₂₀ alkyl groups. In a preferred embodiment, the surfactant S.12 is an alkaline metal salts or earth alkaline metal salt of a reaction product (condensate) of naphthalene sulfonic acid and formaldehyde; a particularly suitable example is Morwet® D425 (Akzo Nobel) In another preferred embodiment, the surfactant S.12 is an alkaline metal salt or earth alkaline metal salt of a reaction product (condensate) of phenol sulfonic acid, formaldehyde and urea; a particularly suitable example is Wettol® D1 or Vultamol® DN (BASF SE).

In a very preferred embodiment of the present invention, the surfactant contained in the aqueous composition of step a) comprises at least one anionic surfactant having at lest one sulphate, sulfonate, phosphate, or phosphonate group, in particular at least one anionic surfactant from the groups S.3, S.6, S.7, S.8, S.9, S.10, S.11 and S.12, especially from the groups S.3, S.7, S.11 and S.12, and at least one surfactant different therefrom, in particular a non-ionic emulsifier or non-ionic polymeric surfactant. If the aqueous composition of step a) contains a combination of at least one anionic surfactant and at least one further surfactant, the weight ratio of anionic surfactant and further surfactant is preferably from 1:10 to 10:1, in particular from 1:5 to 5:1.

Further surfactants are also non-ionic polymeric surfactants, carboxylate group containing polymeric surfactants and non-ionic emulsifiers, such as

| | |
|---|---|
| S.13 | graft or comb copolymers containing poly-C₂-C₄-alkylene oxide moieties, in particular polyethylene oxide moieties PEO, grafted on a polymeric backbone; |
| S.14 | copolymers containing, in polymerised form, (i) C₃-C₅ monoethylenically unsaturated carboxylic acid monomers, and (ii) hydrophobic monomers having a water solubility of not more than 60 g/l at 20°C and 1013 mbar. |
| S.15 | non-ionic block copolymers comprising at least one poly(ethylene oxide) moiety PEO and at least one polyether moiety PAO derived from C₃-C₁₀-alkylene oxides and/or styrene oxide, in particular polyoxyethylene-polyoxypropylene-blockcopolymers; |
| S.16 | polyethyleneglycol-C₁-C₂₂-alkylethers, polyethyleneglycol/polypropyleneglycol-C₁-C₂₂-alkylethers, in particular polyethoxylates and poly-ethoxylates-copropoxylates of linear or branched C₈-C₂₀-alkanoles, more preferably polyethoxylated C₈-C₂₂-fatty alcohols and polyethoxylated C₈-C₂₂-oxoalcohols, such as polyethoxylated lauryl alcohol, polyethoxylated isotridecanol, polyethoxylated cetyl alcohol, polyethoxylated stearyl alcohol, poly-ethoxylates-co-propoxylates of laurylalcohol, poly-ethoxylates-co-propoxylates of cetylalcohol, poly-ethoxylates-co-propoxylates of isotridecylalcohol, poly-ethoxylates-co-propoxylates of stearylalcohol, and esters thereof, such as acetates; |
| S.17 | polyethylenglycol arylethers and polyethyleneglycol/polypropyleneglycol arylethers, in particular polyethoxylates and poly-ethoxylates-co-propoxylates of mono- or di-C₁-C₁₆-alkylphenoles, such as polyethoxylates and poly-ethoxylates-co-propoxylates of nonylphenol, decylphenol, isodecylphenol, dodecylphenol or isotridecylphenol, and esters thereof, such as acetates; |
| S.18 | C₆-C₂₂-alkylglucosides and C₆-C₂₂-alkyl polyglucosides; |
| S.19 | partial esters of polyols with C₆-C₂₂-alkanoic acids, in particular mono- and diesters of glycerine and mono-, di- and triesters of sorbitan, such as glycerine monostearate, sorbitanmonooleat, sorbitantristearat; |
| S.20 | polyethoxylates of C₆-C₂₂-alkylglucosides and polyethoxylates of C₆-C₂₂-alkyl polyglucosides; |
| S.21 | polyethoxylates and poly-ethoxylates-co-propoxylates of C₆-C₂₂-fatty amines; |
| S.22 | polyethoxylates and poly-ethoxylates-co-propoxylates of C₆-C₂₂-fatty acids and polyethoxylates and poly-ethoxylates-co-propoxylates of hydroxyl C₆-C₂₂-fatty acids; |
| S.23 | polyethoxylates of partial esters of polyols with C₆-C₂₂-alkanoic acids, in particular polyethoxylates of mono- and diesters of glycerine and polyethoxylates of mono-, di- and triesters of sorbitan, such as polyethoxylates of glycerine monostearate, polyethoxylates of sorbitanmonooleat, polyethoxylates of sorbitanmonostearat and polyethoxylates of sorbitantristearat; |
| S.24 | polyethoxylates of vegetable oils or animal fats such as corn oil ethoxylate, castor oil ethoxylate, tallow oil ethoxylate; |
| S.25 | polyethoxylates of fatty amines, fatty amides or of fatty acid diethanolamides. |
| S.26 | polyethoxylates and poly-ethoxylates-co-propoxylates of mono-, di-und tristyrylphenols; and the esters thereof, e.g. the acetates; and |

The terms polyethyleneglycol, polyethoxylates and polyethoxylated refer to polyether radicals derived from ethyleneoxide. Likewise, the term poly-ethoxylate-co-propoxylate refers to a polyether radical derived from a mixture of ethyleneoxide and propylenoxide. Thus polyethoxylates have repeating units of the formula [CH₂CH₂O] while poly-ethoxylate-co-propoxylate have repeating units of the formulae [CH₂CH₂O] and [CH(CH₃)CH₂O]. The non-ionic surfactants S.16, S.17 and S.20 to S.26 may belong to the group of non-polymeric surfactants (emulsifiers) or to the group of polymeric surfactants, depending on the number of alkylene oxide repeating units. In the surfactants of these groups, the number of such repeating units will generally range from 2 to 200, in particular from 3 to 100, especially from 3 to 50. The surfactants of the groups S.18 and S.19 belong to non-ionic emulsifiers.

Amongst further surfactants those of the groups S.13, S.15 and S.26 and mixtures thereof are preferred.

Preferred graft or comb copolymers of the group S.13 preferably contain, in polymerised form,
(i) at least one monomer having an oligo- or poly-C₂-C₄-alkylene oxide group, in particular an oligo- or polyethylenoxide group which is attached either via ester linkages or ether linkages to a polymerizable ethylenically unsaturated double bond, in particular an ester of an oligo- or poly-C₂-C₄-alkylene oxide, especially an ester of an oligo- or polyethylenoxide with a C₃-C₅ monoethylenically unsaturated carboxylic acid monomer, such as acrylic acid or methacrylic, or an ester of an oligo- or poly-C₂-C₄-alkylene oxide mono-C₁-C₄-alkylether, especially an ester of an oligo- or polyethylenoxide mono-C₁-C₄-alkylether with a C₃-C₅ monoethylenically unsaturated carboxylic acid monomer, such as acrylic acid or methacrylic acid,
(ii) at least one non-ionic monomer having a water solubility of at least 10 g/l at 20°C and 1013 mbar, e.g. C₁-C₃-alkyl esters or hydroxy-C₂-C₄-alkyl esters of C₃-C₅ monoethylenically unsaturated carboxylic acid monomers, such as methyl acrylate, methyl methacrylate, 2-hydroxyethyl acrylate, 2- or 3-hydroxylpropyl acrylate, 2-hydroxyethyl methacrylate and 2- or 3-hydroxypropyl methacrylate.
(iii) optionally a C₃-C₅ monoethylenically unsaturated carboxylic acid monomer, such as acrylic acid, methacrylic acid or maleic acid.

According to another preferred embodiment graft or comb copolymers of the group S.13 preferably contain poly-C₂-C₄-alkylene oxide group, in particular a polyethylene oxide group as a polymer back bone and polymeric side chains of polymerised monomers selected form vinyl esters of C₂-C₁₀-alkanoic acid, in particular from vinyl esters of C₂-C₆-alkanoic acid such as vinyl acetate, vinyl propionate, vinyl butyrate, vinyl valerate or vinylhexanoate.

The weight-average molecular weight of the graft or comb copolymers of group S.13 is preferably in the range from 5000 to 800000 g/mol, in particular from 7500 to 600000 g/mol, especially from 10000 to 400000 g/mol. The graft or comb copolymers of group S.13 are preferably not crosslinked. In a particular embodiment of the surfactants S.13, the graft or comb polymer contains or consists of, in polymerized form, methyl methacrylate and an ester of polyethylene oxide monomethylether with methacrylic acid, and optionally methacrylic acid, such as in the copolymer having CAS-No. 1000934-04-1 which is commercially available as Tersperse® 2500 or in the copolymer having CAS-No. 119724-54-8 which is commercially available as Atlox® 4913. In another particular embodiment of the surfactants S.13, the graft or comb polymer contains a backbone of polyethylene oxide, to which polymeric side chains of polymerised units of one or more C₂-C₆-alkanoic acids, in particular polymerized units of vinyl acetate are bound. These polymers have been described in WO 2007/138053, in particular page 5, line 14 to page 10, line 25, and in WO 2011/110481 as polymeric additives. To both WO 2007/138053 and WO 2011/110481 full reference is made.

Preferred polymeric surfactants of the group S.14 are those which contain, in polymerized form (i) at least one C₃-C₅ monoethylenically unsaturated carboxylic acid monomer, and (ii) at least one hydrophobic monomer, having preferably a water solubility of at most 30 g/l. Suitable C₃-C₅ monoethylenically unsaturated carboxylic acid monomers are in particular acrylic acid, methacrylic acid, maleic acid, fumaric acid and itaconic acid. Preferred hydrophobic are selected from vinylaromatic monomers such as styrene monomers and C₂-C₁₂-monolefines. Preferably, the polymeric surfactants S.14 contain, in polymerised form, (i) at least one C₃-C₅ monoethylenically unsaturated carboxylic acid monomer, in particular acrylic acid or methacrylic acid, and (ii) at least one hydrophobic monomer selected from styrene monomers and C₂-C₁₂-monolefines. The weight ratio from acid monomer to hydrophobic monomer is preferably in the range of from 10:1 to 1:3; preferably from 5:1 to 1:2. A particularly suitable example for surfactants S.14 is Atlox® Metasperse 500L (Uniqema), and the like.

The non-ionic block copolymers of the surfactant class S.15 comprise at least one poly(ethylene oxide) moiety PEO and at least one hydrophobic polyether moiety PAO, which is generally derived from one or more C₃-C₁₀ alkylene oxides. The PAO moiety usually comprises at least 3, preferably at least 5, in particular 10 to 100 repeating units (number average) which are derived from one or more C₃-C₁₀ alkylene oxides, such as propylene oxide, 1,2-butylene oxide, cis- or trans-2,3-butylene oxide or isobutylene oxide, 1,2-pentene oxide, 1,2-hexene oxide, 1,2-decene oxide and styrene oxide, among which C₃-C₄ alkylene oxides are preferred. Preferably, the PAO moieties comprise at least 50% by weight, and more preferably at least 80% by weight of repeating units derived from propylene oxide. The PEO moieties usually comprise at least 3, preferably at least 5, and more preferably at least 10 repeating units derived from ethylene oxide (number average). The weight ratio of PEO moieties and PAO moieties (PEO:PAO) usually ranges from 1:10 to 10:1, preferably from 1:10 to 2:1, more preferably from 2:8 to 7:3 and in particular from 3:7 to 6:4. Those surfactants c25) are preferred which have a number average molecular weight M_{N} ranging from more than 1200 to 100000 Dalton, preferably from 2000 to 60000 Dalton, more preferably from 2500 to 50000 Dalton and in particular from 3000 to 20000 Dalton. In general, the PEO moieties and the PAO moieties make up at least 80% by weight, and preferably at least 90% by weight, e.g. 90 to 99.5% by weight, of the non-ionic block copolymer surfactants S.15. Suitable surfactants S.15 are described e.g. in WO2006/002984, in particular those having the formulae P1 to P5 given therein.

The non-ionic block copolymer surfactants of the group S.15 described herein are commercially available e.g. under the trade names Pluronic®, such as Pluronic® P 65, P84, P 103, P 105, P 123, Pluronic PE 3500, PE 4300, PE 4400, PE 6200, PE 6400, PE 6800, PE 9200, PE 9400, PE 10300, PE 10400, PE 10500 and Pluronic® L 31, L 43, L 62, L 62 LF, L 64, L 81, L 92 and L 121 (BASF SE); Pluraflo® such as Pluraflo® L 860, L1030 and L 1060 (BASF SE); Tetronic®, such as Tetronic® 704, 709, 1104, 1304, 702, 1102, 1302, 701, 901, 1101, 1301 (BASF SE); Agrilan® AEC 167 and Agrilan® AEC 178 (Akcros Chemicals); Antarox® B/848 (Rhodia); Berol® 370 and Berol® 374 (Akzo Nobel Surface Chemistry); Dowfax® 50 C15, 63 N10, 63 N30, 64 N40 and 81 N10 (Dow Europe); Genapol® PF (Clariant); Monolan®, such as Monolan® PB, Monolan® PC, Monolan® PK (Akcros Chemicals); Panox® PE (Pan Asian Chemical Corporation); Symperonic®, such as Symperonic® PE/L, Symperonic® PE/F, Symperonic® PE/P, Symperonic® PE/T (ICI Surfactants); Tergitol® XD, Tergitol® XH and Tergitol® XJ (Union Carbide); Triton® CF-32 (Union Carbide); Teric PE Series (Huntsman); and Witconol®, such as Witconol® APEB, Witconol® NS 500 K (Akzo Nobel Surface Chemistry) and the like. Among these, the Pluronic® and the Pluraflo® block copolymers are preferred, particularly suitable examples being Pluronic® P105 and Pluraflo® 1060, and the like. Particular preference is also given to mono-C₁-C₁₀ alkylether of polyethylenoxid-polypropylenoxid-Blockpolmers having a number average molecular weight M_{N} of from 1000 to 10000 Dalton. Particularly suitable examples include Atlox® G 5000 (Uniqema), Tergitol®XD and the like.

In the group of surfactants S.16 preference is given to polyethoxylates and poly(ethoxylate-co-propoxylates) of linear C₈-C₂₂ alkanols. Likewise preferred are poly(ethoxylate-co-propoxylates) of C₁-C₁₀ alkanols, with particular preference given to butanol. Amongst the surfactants c.14 those are preferred which have a number average molecular weight M_{N} of not more than 5000 Dalton. Amongst the surfactants S.15 those are preferred which have a number average molecular weight M_{N} of not more than 5000 Dalton. Particular preference is given to poly(ethoxylate-co-propoxylates) of C₁-C₁₀ alkanols, having a number average molecular weight M_{N} of from 500 to 5000 Dalton Particularly suitable examples include Atlox® G 5000 (Akzo Nobel), Tergitol®XD and the like.

In the surfactants of the group S.26 a phenoxy radical carries 1, 2 or 3 styryl moieties and a polyethylene oxide moiety PEO or a poly(ethylenoxide-co-propylenoxide) moiety PEO/PPO. The PEO moiety typically comprises from 5 to 50 ethylene oxide groups. Preferred surfactants S.26 may be represented by the formula (C₂H₄O)ₙ•C₃₀H₃₀O, wherein n is an integer of from 5 to 50 and C₃₀H₃₀O represents a tri(styryl) phenol group. A particularly suitable example is Soprophor® BSU (Rhodia).

In step a) of the process of the invention, an aqueous composition of metalaxyl, in particular of metalaxyl M is provided, wherein metalaxyl is present in essentially dissolved form. Such a composition is provided by treating an aqueous suspension of metalaxyl which, besides water, contains at least one surfactant, until metalaxyl is present to at least 95% in dissolved form. Treating may include prolonged stirring or heating or combinations of these measures.

Preferably, the temperature of the treatment will be in the range from 10 to 50°C, in particular from 15 to 40°C. The time required for essentially complete dissolution of metalaxyl can be determined by routine experiments, e.g. by determining the concentration of metalaxyl in the serum. Generally times from 10 min to 5 h, in particular from 30 min to 3 h are required to achieve essentially complete dissolution

In addition to water and surfactant, the aqueous suspension used in step a) may contain one or more aliphatic alcohols which have at least one OH group, in particular an aliphatic polyol, i.e. an aliphatic alcohol having at least 2 OH groups, e.g. 2, 3 or 4 OH groups. Preferred aliphatic alcohols are liquid at 20°C. Preferred aliphatic alcohols are completely miscible with water at 20°C or at least soluble in water in an amount of at least 300 g/l. Suitable aliphatic alcohols include C₁-C₄-alkanols, such as methanol, ethanol, n-propanol, i-propanol, n-butanol, tert.-butanol or 2-butanol, aliphatic polyols having preferably 2, 3 or 4 OH groups, and having preferably from 2 to 6 carbon atoms, such as ethylene glycol, propylene glycol, glycerol, diethylene glycol, triethylene glycol, dipropylene glycol, butylene glycol, pentylene glycol or hexylene glycol. In a particular preferred embodiment, the aliphatic alcohol is glycerol or propylene glycol. The concentration of the aliphatic alcohol in the aqueous composition is generally from 1 to 30 % by weight, in particular from 5 to 20 % by weight, based on the total weight of the aqueous composition provided in step a).

The aqueous composition of step a) or the aqueous suspension of step b) may contain a further pesticide PC*, which fulfils at least one of the following requirements. The further pesticide PC*
i) is soluble in water, i.e. its solubility is sufficient to achieve complete dissolution at 20°C; and/or
ii) it has a melting point of above 100°C, in particular at least 110°C.

Melting points, as referred herein, are melting points as determined in accordance with DIN EN ISO 11357-1:2009, by differential scanning calorimetry.

In a particular embodiment of the invention, the further pesticide PC* is only sparingly soluble in water, i.e. its solubility in water is at most 5 g/L, in particular at most 1 g/L, especially at most 0.5 g/L at 20°C in deionized water.

Suitable pesticides PC* are e.g. triticonazole, fluxapyroxad, boscalid, metconazole, dimethomorph, prochloraz, thiophanate-methyl, iprodione, epoxiconazole, fenpropimorph, chlorothalonil, fludioxonil, prothioconazole, tebuconazole, propiconazole, thiram, metiram, dithianon, mancozeb, dimoxystrobine, ametoctradin, fipronil, rynaxypyr, thiametoxam, clothianidin, thiacloprid, imidacloprid and dinotefuran.

In a particular embodiment of the invention, the further pesticide PC* is triticonazol.

In another particular embodiment of the invention, the further pesticide PC* is boscalid.

In a further particular embodiment of the invention, the further pesticide PC* is fluxapyroxad.

In a further particular embodiment of the invention, the further pesticide PC* is dimethomorph.

Preferably, the concentration of further pesticide PC* in the aqueous composition, if present, is from 0.2 to 30% by weight, in particular from 0.5 to 20% by weight and especially from 1 to 15% by weight, based on the total weight of composition used in step a). In particular the weight ratio of metalaxyl to the further organic pesticide compound PC* is from 0.1 to 25:1, more particularly from 0.2:1 to 5:1 and especially from 0.3:1. to 1:2.

If the pesticide compound PC* is sparingly water-soluble, it is present in the aqueous composition and also in the final formulation in the form of suspended particles. Then, the weight average particle diameter of the pesticide compound PC*, as determined by light scattering, is preferably in the range from 0.5 to 10 µm, in particular from 1 to 5 µm. Preferably, the D₉₀ value of the particle size distribution is below 10 µm, i.e. at least 90% by weight of the particles of the pesticide compound PC* have a particle size below 10 µm. The particle size distribution of the pesticide PC* in the aqueous composition can be determined by quasi-elastic light scattering of an aqueous dilution composition at 20°C. Quasi-elastic light scattering of the highly diluted compositions may be performed in accordance with the methods described in CIPAC MT 187 or ISO 13320-1:1999. Dilution depends on light obscuration values achieved at certain particle concentration level to produce acceptable signal to noise ratio and the required dilution rate can be assessed by routine experiments.

The aqueous composition of step a) can be prepared by standard procedures, e.g. by mixing an aqueous solution of the one or more surfactants, which may contain one or more aliphatic alcohol, with an aqueous suspension containing metalaxyl. Said aqueous suspension may further contain one or more pesticides PC* as defined above.

Prior to, during or after step b), one or more further ingredients may be included into the final formulation, including additives affecting the flow behaviour, defoamers, colorants and biocides, which prevent spoilage by infestation of the formulation with microorganisms such as bacteria or fungi.

Additives which affect the flow behavior of the formulation are also termed thickeners. Thickeners may also assist in stabilizing the final formulation against caking. Mention may be made, in this connection, for example, of commercial thickeners based on polysaccharides, such as methylcellulose, carboxymethylcellulose, hydroxypropylcellulose (Klucel® grades), Xanthan Gum (commercially available e.g. as Kelzan® grades from Kelco or Rhodopol® grades from Rhodia), synthetic polymers such as acrylic acid polymers (Carbopol® grades), polyvinyl alcohol (e.g. Mowiol® and Poval® grades from Kuraray) or polyvinyl pyrrolidones, silicic acid or phyllosilicates such as montmorillonites, attapulgites and bentonites, which may be hydrophobized, (commercially available as Attaclay® grades and Attaflow® grades from BASF SE; or as Veegum® grades and Van Gel® grades from R.T. Vanderbilt). Polysaccharide based thickeners and especially Xanthan Gum are preferred thickeners. The concentration of thickeners in the final formulation will generally not exceed 2% by weight, based on the total weight of the final formulation, and is preferably in the range from 0.01 to 5% by weight, in particular from 0.02 to 3% by weight and especially from 0.05 to 2% by weight, based on the total weight of the final formulation. Preferably, a thickener and especially a polysaccharide based thickener is included in the composition provided in step a), i.e. prior to step b) of the process of the present invention. However, the thickener may also be included afterwards.

Antifoam agents, also termed defoamers, may be included into the composition of step a) or added to the final formulation. Examples of suitable antifoam agents include e.g. silicone emulsions (such as, for example, Drewplus® grades Silikon® SRE, Wacker or Rhodorsil® from Rhodia), long-chain alcohols, fatty acids, organofluorine compounds and mixtures thereof. Generally, defoamers are used in such amounts that a concentration in the range from 0.01 to 1% by weight, in particular from 0.02 to 0.5% by weight, based on the total weight of the final formulation, will result.

Biocides can be added to stabilize the formulation against attack by microorganisms. Suitable biocides are, for example, based on isothiazolones such as the compounds marketed under the trademarks Mergal® K10, Proxel® grades from Avecia (or Arch) or Acticide® grades such as Acticide® MBS or Acticide® RS from Thor Chemie and Kathon® grades such as Kathon® MK from Rohm & Haas. Generally, biocides may be included into the composition of step a) or added to the final formulation. Generally, biocides are used in such amounts that a concentration in the range from 0.01 to 1% by weight, in particular from 0.02 to 0.5% by weight, based on the total weight of the final formulation, will result.

The formulation of the invention may optionally comprise also coloring agents such as pigments or dyes, in particular, if the composition is intended for seed treatment purposes. Suitable pigments or dyes for seed treatment formulations are pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108. Generally, colorants may be included into the composition of step a) or added to the final formulation. Generally, colorants are used in such amounts that a concentration in the range from 1 to 15% by weight, in particular from 5 to 10% by weight, based on the total weight of the final formulation, will result.

The composition of step a) is then mixed with a suspension of the organic pesticide compound PC. Suitable pesticide compounds PC are those, which have a solubility in water of at most 1 g/l at 20°C, in particular at most 0.5 g/l at 20°C, and a melting point in the range from 40 to 100°C, in particular in the range from 50 to 95°C.

Examples of suitable pesticide compounds PC include, but are not limited to pyraclostrobin, imazalil, dodemorph acetate, pyrimethanil, difenoconazole, ipconazole, Trifloxystrobin, fenoxanil, carboxin, metrafenone and acetamiprid.

In a particular preferred embodiment of the invention, the pesticide compound PC is pyraclostrobin.

In an especially preferred embodiment of the invention, the pesticide compound PC is pyraclostrobin and the pesticide compound PC* is selected from boscalid, fluxapyroxad, diemthomorph and triticonazol.

In the suspension of the organic pesticide PC the concentration of the organic pesticide PC is usually from 1 to 50% by weight, in particular from 2 to 40% by weight, especially from 5 to 20% by weight, based on the weight of the suspension. The suspension of the organic pesticide PC may additionally contain one or more pesticide compounds PC* as defined above. Then, the concentration of the organic pesticide PC is usually from 1 to 40% by weight, in particular from 2 to 35% by weight, especially from 5 to 15% by weight, based on the weight of the suspension, while the concentration of the organic pesticide PC* is usually from 1 to 40% by weight, in particular from 2 to 35% by weight, especially from 5 to 15% by weight, based on the weight of the suspension. The total concentration of pesticide compounds PC and PC* is then usually from 1 to 50% by weight, in particular from 2 to 40% by weight, especially from 5 to 20% by weight, based on the weight of the suspension.

Principally, any aqueous suspension of the pesticide compound PC can be used. Such a suspension may optionally contain one or more surfactants as mentioned above, in particular from the group of surfactants S.3, S.6, S.7, S.8, S.9, S.10, S.11, S.12, S.13, S.15 and S.26, in particular at least one anionic surfactant having at least one sulphate, sulfonate, phosphate or phosphonate group, e.g. an anionic surfactant from groups surfactants S.3, S.6, S.7, S.8, S.9, S.10, S.11 or S.12, in particular from groups S.3, S.7 or S.12, optionally in combination with at least one further surfactant as defined above and which is in particular selected from the groups S.13 to S.26, in particular from groups S.13, S.15 and S.26.

The concentration of surfactants in the suspension of the pesticide compounds PC is e.g. from 1 to 50% by weight, in particular from 2 to 30% by weight, based on the weight of pesticide PC contained in the suspension, or from 0.2 to 20% by weight, in particular from 0.5 to 10% by weight based on the suspension of the pesticide compound PC. If the suspension of the pesticide compounds PC also contains the pesticide compound PC*, the concentration of surfactants in the suspension of the pesticide compounds PC and PC*, is e.g. from 1 to 50% by weight, in particular from 2 to 30% by weight, based on the total weight of pesticide compounds PC contained in the suspension, or from 0.3 to 30% by weight, in particular from 0.7 to 15% by weight based on the suspension of the pesticide compound PC.

As the pesticide compound PC is sparingly water-soluble, it is present in the aqueous suspension and in the final formulation in the form of suspended particles. The weight average particle diameter of the pesticide compound PC, as determined by light scattering, is preferably in the range from 0.5 to 10 µm, in particular from 1 to 5 µm. Preferably the D₉₀ value of the particle size distribution of suspension of the pesticide compound PC is below 10 µm. The particle size distribution of the pesticide PC in the aqueous composition can be determined by quasi-elastic light scattering of an aqueous dilution composition at 20°C. Quasi-elastic light scattering of the highly diluted compositions may be performed in accordance with the methods described in CIPAC MT 187 or ISO 13320-1:1999. Dilution depends on light obscuration values achieved at certain particle concentration level to produce acceptable signal to noise ratio and the required dilution rate can be assessed by routine experiments.

Suitable suspensions of such pesticides are commercially available and have been described in prior art, e.g. in WO2011/006896, or they may be prepared by the process described in WO2011/006896, to which full reference is made.

Mixing of the aqueous suspension of the organic pesticide compound PC with the aqueous composition of metalaxyl can be achieved by conventional methods of mixing aqueous suspensions or aqueous solutions. Generally, the mixing is performed in a suitable mixing device, e.g. a stirred-tank mixer or by using a dissolver. Mixing is generally performed at temperature in the range from 5 to 40°C, in particular from 10 to 30°C. Preferably, mixing of the suspension and the aqueous composition of step a) is performed at a temperature below the melting point of the pesticide compound PC, in particular at a temperature, which is at least 15 K, especially at least 20 K below the melting point of the pesticide compound PC.

The relative amounts of the suspension and the composition of metalaxyl prepared in step a) are generally chosen such the desired ratio of metalaxyl to pesticide compound PC is achieved. Preferably, the aqueous suspension of the organic pesticide compound PC is used in such an amount that the weight ratio of metalaxyl to the further organic pesticide compound PC is from 0.1 to 25, in particular from 0.2:1 to 5:1, especially from 0.3:1 to 2:1.

The thus obtained formulation contains metalaxyl, in particular metalaxyl M, at least one pesticide compound PC as defined above, in particular pyraclostrobin, and optionally one or more further pesticide compounds PC*, which are as defined above and in particular selected from the group consisting of triticonazole, fluxapyroxad, boscalid, metconazole, dimethomorph, prochloraz, thiophanate-methyl, iprodione, epoxiconazole, fenpropimorph, chlorothalonil, fludioxonil, prothioconazole, tebuconazole, propiconazole, thiram, metiram, dithianon, mancozeb, dimoxystrobine, ametoctradin, fipronil, rynaxypyr, thiametoxam, clothianidin, thiacloprid, imidacloprid and dinotefuran, and especially from the group consisting of triticonazol, fluxapyroxad and boscalid.

In the final formulation, concentration of metalaxyl is generally at least 0.2% by weight, preferably at least 0.3% by weight and in particular at least 0.5% by weight, based on the total weight of the formulation. The concentration will generally not exceed 5% by weight and is preferably from 0.2 to 5% by weight, in particular from 0.3 to 3% by weight, especially from 0.5 to 2% by weight, based on the total weight of the formulation.

In the final formulation, the concentration of the low melting pesticide compound PC is preferably from 0.2 to 15% by weight, in particular from 5 to 10% by weight, based on the total weight of the final formulation. The weight ratio of the further pesticide compound PC to metalaxyl is preferably from 0.1:1 to 25:1, in particular from 0.2:1 to 5:1, and especially from 0.3:1 to 2:1.

In the final formulation, the concentration of the at least one surfactant is preferably, from 0.5 to 20% by weight, in particular from 1 to 15% by weight, based on the total weight of the final formulation.

In the final formulation, the concentration of the further pesticide compound PC*, if present, is preferably from 0.1 to 25% by weight, in particular from 0.2 to 15% by weight, especially from 1 to 10% by weight, based on the total weight of the final formulation. The weight ratio of the further pesticide compound PC* to metalaxyl is preferably from 0.1:1 to 25:1, in particular from 0.2:1 to 5:1, and especially from 0.3:1 to 2:1.

In the final formulation, the concentration of the aliphatic alcohol, if present, is generally from 1 to 30% by weight, in particular from 2 to 20% by weight, based on the total weight of the final formulation.

In the final formulation, the concentration of the thickener, if present, is generally from in the range from 0.01 to 5% by weight, in particular from 0.02 to 3% by weight and especially from 0.05 to 2% by weight, based on the total weight of the final formulation.

In the final formulation the amount of water is generally at least 50% by weight, in particular at least 70% by weight, based on the total weight of the formulation. It is clear to a skilled person that the amount of water will depend on the amount of other ingredients contained in the formulation and that the relative amounts of all ingredients will add up to a total of 100% by weight.

Apart from that, the final formulation may contain one or more additives, such as one or more biocides, one or more colorants and/or one or more defoamers, preferably in the amounts given above.

The formulations of the invention are particularly useful for combating harmful fungi. Depending on the further pesticide PC and the optionally present further pesticide PC* a large number of harmful fungi may be controlled. The formulations obtained by the process of the present invention may be used as such or they may be diluted with water to the desired application rate, which depends on the desired purpose and the further pesticide PC and the optionally present further pesticide PC*. The formulations of the present invention are particularly useful for seed treatment applications.

The following examples shall further illustrate the present invention.

### Analytics:

Particle size of the aqueous suspensions and final formulations were determined on appropriate aqueous dilutions by laser light scattering of aqueous dilutions in a accordance with the method of ISO 13320-1:1999(E) at 22°C (ambient temperature) using a Malvern Mastersizer 2000 or 3000. The particle size distributions are calculated by an interpretation of the sample's scattering pattern using the Fraunhofer model.

Wet sieve residues were determined in accordance with CIPAC procedure 59.3 using sieves with 150 µm and 45 µm meshes.

A conventional polarizing microscope was used to observe crystallinity and particles sizes of the pesticide compound material.

### Materials

Surfactant S1: comb polymer of methyl methacrylate, methacrylic acid and (methoxypolyethylene glycol)methacrylate, 33% solution in 1:1 mixture propylene glycol/water (commercially available, for example as Atlox® 4913 from Croda or Tersperse 2500 from Huntsman).
Surfactant S2: Ammonium salt of the semisulfate of an ethoxilated tristyrylphenol (Soprophor 4D384 from Solvay or Tersperse 2218 from Huntsman)
Surfactant S3: sodium salt of a naphthalene formaldehyde condensate (Morwet® D425, Akzo Nobel or Tersperse 2200 from Huntsman)
Surfactant S4: sodium salt of a phenolsulfonic urea formaldehyde condensate (Wettol D1 or Vultamol DN BASF SE)
Surfactant S5: poly(ethylene glycol block propylene glycol block polyethylene glycol) (Pluronic PE 10500)
Surfactant S6: graft polymer of vinyl acetate on polyethylene glycol (commercially available, for example as Sokalan PG 101 of BASF SE).
Surfactant S7: Potassium salt of the phosphate of an ethoxilated tristyrylphenol (Soprophor FLK from Solvay)
Thickener 1: Xanthan Gum, Kelzan® S (Kelco).
Thickener solution: 2% b.w. aqueous solution of Xanthan Gum in water containing 0.7% b.w. of biocide.
Defoamer: Silicon based defoamer, Silicon SRE-PFL from Wacker
Biozide: Isothiazolinone based biocide: Acticide® mbs of Thor

### Preparation example 1:

Premix 1: Suspension of 19.2% by weight of Triticonazol and 12.6% by weight of Metalaxyl M in water.

To 34 kg of water 9,3 kg of glycerol, 2.8 kg of surfactant 1, 1.9 kg of surfactant 2, 15.9 kg of triticonazol, 9.4 kg of metalaxyl and 1.9 kg of defoamer was added. The thus obtained mixture is milled in a mechanical mill and subsequently in a bead mill until the particle size distribution, as measured by laser diffraction showed that the D90 value was below 4 µm.

### Preparation example 2:

Premix 2: Aqueos suspension of Pyraclostrobin with following components:
Pyraclostrobin (100%): 18.4% by weight
Water: 65.2% by weight
Glycerin: 10.9% by weight
Surfactant S1: 3.2% by weight
Surfactant S2: 1.1% by weight
Defoamer: 0.48% by weight
Biocide: 0.19% by weight
Xanthan Gum: 0.28% by weight

In a first step a concentrated mill base of pyraclostrobin was prepared with 28% by weight of water related to total water quantity in the premix, all surfactants, glycerin and 35% of pyraclostrobin related to total mill base weight. The mixture was milled in two steps; first on a mechanical mill until the retention on a 150 µm wet sieve was < 5% and subsequently in a bead mill until the particle size distribution as measured by laser diffraction (e.g. on Malvern Mastersizer) shows a D₉₀ < 4 µm according to procedure described above. In the next step Xanthan Gum was added as a 2% aqueous solution together with biocide and remaining water.

### Preparation example 3:

Premix 3: Suspension of 22.6% by weight of Triticonazol and 12.3% by weight of Metalaxyl M in water.

The premix 3 was prepared by analogy to the protocol given in preparation example 1 for premix 1. The overall composition of premix was as follows:
Water: 45.9 % by weight
Glycerin: 12.5% by weight
Surfactant S7: 2.5% by weight
Surfactant S1: 3.8% by weight
Triticonazol: 22.6% by weight
Metalaxyl: 12.3% by weight
Defoamer: 0.4% by weight

### Preparation example 4:

### Premix 4: Aqueous suspension of Pyraclostrobin:

The premix 4 was prepared by analogy to the protocol given in preparation example 2 for premix 2. The overall composition of premix was as follows:
Pyraclostrobin (100%): 36.0% by weight
Water: 34.3 % by weight
Glycerin: 21.0 % by weight
Surfactant S1: 6.2% by weight
Surfactant S7: 2.2% by weight
Defoamer: 0.3% by weight

### Preparation example 5:

Premix 5: Suspension of 22.6% by weight of Triticonazol and 12.3% by weight of Metalaxyl M in water.

The premix 5 was prepared by analogy to the protocol given in preparation example 1 for premix 1. The overall composition of premix was as follows:
Water: 45.9 % by weight
Glycerin: 12.5% by weight
Surfactant S4: 2.5% by weight
Surfactant S5: 3.8% by weight
Triticonazol: 22.6% by weight
Metalaxyl: 12.3% by weight
Defoamer: 0.4% by weight

### Preparation example 6:

### Premix 6: Aqueous suspension of Pyraclostrobin:

The premix 6 was prepared by analogy to the protocol given in preparation example 2 for premix 2. The overall composition of premix was as follows:
Pyraclostrobin (100%): 36.0% by weight
Water: 34.3 % by weight
Glycerin: 21.0 % by weight
Surfactant S5: 6.2% by weight
Surfactant S4: 2.2% by weight
Defoamer: 0.3% by weight

### Example 1:

300 g of water were charged to a vessel followed by the addition of 22 g of surfactant 1, 6 g of surfactant 2, 98.9 g of glycerol, 1.9 g of defoamer, 1.4 g of biocide, 80 g of premix 1, 200 g of colorant slurry and 190 g of the aqueous thickener solution. The mixture was homogenized by stirring with a dissolver disc (φ = 60 mm) at 600 rpm for at least 1 h at 25°C until metalaxyl was completely dissolved (determined by measuring turbidity of the liquid phase or visually).

Then 92.7 g of premix 2 were added followed by the addition of water ad 1 L. The mixture was warmed to 35°C and stirred with a dissolver disc (φ = 60 mm) at 600 rpm for further 1 h.

The thus obtained formulation was divided into 2 samples, which were stored at 20 +/-2°C for 2 h and 72 h, respectively. Then the formulations were analyzed with regard to particle size distribution and wet sieve residue. The results are summarized in table 1:

**Table 1:**

| | 2 h | 72 h |
|---|---|---|
| D₅₀ [µm] | 1.3 | 1.3 |
| D₉₀ [µm] | 3.6 | 3.3 |
| Wet sieve 150 µm [% b.w.] | < 0.01 | < 0.01 |
| Wet sieve 45 µm [% b.w.] | < 0.01 | < 0.01 |

### Comparative Example 1:

80 g of premix 1 and 92.7 g of premix 2 were mixed, warmed to 35°C and stirred at 600 rpm for 1 h. Then 200 g of colorant slurry, 190 g of the aqueous thickener solution, 22 g of surfactant 1, 98.9 g of glycerol, 6 g of surfactant 2, 1.9 g of defoamer, 0.1 g of biocide, and water to a total volume of 1 L were added. The mixture was stirred at 500 with a dissolver disc (φ = 60 mm) rpm for 1 h at 25°C.

The thus obtained formulation was analyzed with regard to particle size distribution. The results are summarized in table 2:

**Table 2:**

| | |
|---|---|
| D₅₀ [µm] | 53 |
| D₉₀ [µm] | 102 |

### Example 2:

300 g of water were charged to a vessel followed by the addition of 22 g of surfactant 1, 6 g of surfactant 2, 98.9 g of glycerol, 1.9 g of defoamer, 1.4 g of biocide, 80 g of premix 1, 200 g of colorant slurry and 170 g of the aqueous thickener solution. The mixture was homogenized with a dissolver disc (φ = 60 mm) at 1000 rpm for 1 h at 25°C until metalaxyl was completely dissolved.

Then 92.7 g of premix 2 and water to a total volume of 1 L were added and the mixture was homogenized with a dissolver disc (φ = 60 mm) at 1000 rpm for 10 min. at 25°C.

The thus obtained formulation was divided into 3 samples, which were stirred for 1 h at 500 rpm at 20°C, 30°C and 40°C, respectively. Then the formulations were analyzed with regard to particle size distribution, wet sieve residue and by microscopy. The formulations were stored for 6 days at 20°C, 30°C and 40°C, respectively and analyzed again. The results are summarized in table 3:

**Table 3:**

| | 20°C | 30°C | 40°C |
|---|---|---|---|
| After 1 h | | | |
| D₉₀ [µm] | 2.9 | 3.2 | 3.0 |
| Wet sieve 150 µm [% b.w.]¹⁾ | 0 | 0 | 0 |
| Microscopy | No crystals | No crystals | Few crystals < 10 µm |

| After 6 days | | | |
|---|---|---|---|
| D₉₀ [µm] | 2.9 | 3.2 | 3.0 |
| Wet sieve 150 µm [% b.w.]¹⁾ | 0 | 0 | 0 |
| Wet sieve 45 µm [% b.w.]¹⁾ | < 0.01 | < 0.01 | 0.02 |
| Microscopy | No crystals | Few agglomerates | Few crystals < 15 µm |

| | | | |
|---|---|---|---|
| 1)based on active ingredient contained in formulation | | | |

### Comparative Example 2:

80 g of premix 1 and 92.7 g of premix 2 were mixed and the mixture was homogenized with a dissolver disc (φ = 60 mm) at 800 rpm for 10 min. at 25°C.

The thus obtained formulation was divided into 3 samples, which were stirred for 1 h at 500 rpm at 20°C, 30°C and 40°C, respectively. Then the formulations were analyzed with regard to particle size distribution, wet sieve residue and by microscopy. The formulations were stored for 6 days at 20°C, 30°C and 40°C, respectively and analyzed again. The results are summarized in table 4:

**Table 4:**

| | 20°C | 30°C | 40°C |
|---|---|---|---|
| After 1 h | | | |
| D₉₀ [µm] | 3.0 | 2.9 | 2.8 |
| Wet sieve 150 µm [% b.w.]¹⁾ | < 0.01 | < 0.01 | 0.05 |
| Microscopy | No crystals | Agglomerates | Few large crystals |

| After 6 days | | | |
|---|---|---|---|
| D₉₀ [µm] | 3.3 | 7.7 | 169.4 |
| Wet sieve 150 µm [% b.w.]¹⁾ | < 0.01 | 1.48 | 3.49 |
| Wet sieve 45 µm [% b.w.]¹⁾ | < 0.01 | 2.04 | 3.74 |
| Microscopy | No crystals | Agglomerates and crystals | Big crystals about 500 µm |

| | | | |
|---|---|---|---|
| 1)based on active ingredient contained in formulation | | | |

### Examples 3 to 8

### General procedure

In a first step a mill base of fluxapyroxad/pyraclostrobin is prepared containing 20% by weight of each active ingredient related to total mill base weight, 17% by weight of respective surfactant related to total amount of this respective surfactant in the final product, 0.5% by weight of defoamer, related to total mill base amount and 80% by weight water related to total water quantity in the mill base. After bead milling, biocide (0.4% by weight, related to total mill base weight) and thickener (0.15% by weight, related to total mill base weight) and remaining water are added.

Final products were prepared as follows:
Water (64% by weight, related to total water quantity in final product), surfactants (remaining quantity), propylene glycol (19% by weight related to total final product weight), defoamer (92% by weight of total Silicone amount) and biocide (92.5% by weight related to total biocide amount) are combined and metalaxyl (13.3 g/L) is added to the slurry with stirring. The obtained mixture is stirred for 2 h at 20°C and 1h at 40°C to achieve complete dissolution of metalaxyl. Then thickener solution in an amount of 96% by weight of total thickener amount in final formulation are added and the mixture is stirred for further 2 h at 500 rpm.

Then, the mill base of fluxapyroxad/pyraclostrobin is added in appropriate amount to obtain 16.7 g/L of each active in the final formulation. Remaining 30% of water related to total water content in formulation is added to the end.

The overall composition is given in the following table 5.

**Table 5: Overall composition of the formulation**

| Ingredients¹⁾ | Ex. 3 | Ex. 4 | Ex. 5 | Ex. 6 | Ex. 7 | Ex. 8 |
|---|---|---|---|---|---|---|
| 1,2-PG ²⁾ | 200 | 200 | 200 | 200 | 200 | 200 |
| Biocide | 4.0 | 4.0 | 4.0 | 4.0 | 4.0 | 4.0 |
| Fluxapyroxad | 16.7 | 16.7 | 16.7 | 16.7 | 16.7 | 16.7 |
| Metalaxyl | 13.3 | 13.3 | 13.3 | 13.3 | 13.3 | 13.3 |
| Pyraclostrobin | 16.7 | 16.7 | 16.7 | 16.7 | 16.7 | 16.7 |
| S1 | 30 | - | - | - | - | - |
| S2 | 10 | - | - | 20 | - | - |
| S3 | - | 30 | 20 | 30 | - | - |
| S4 | - | 10 | 10 | - | 10 | 10 |
| S5 | - | - | 10 | - | - | - |
| S6 | - | - | - | - | 30 | 100 |
| Defoamer | 5.0 | 5.0 | 5.0 | 5.0 | 5.0 | 5.0 |
| Water | 751 | 751 | 751 | 751 | 751 | 682 |
| Thickener | 3.1 | 3.1 | 3.1 | 3.0 | 3.1 | 2.5 |

| | | | | | | |
|---|---|---|---|---|---|---|
| 1)All amounts given in g/L 2)1,2-PG: 1,2-propylene glycol | | | | | | |

The thus obtained formulations were stored for 8 weeks at cycling temperatures from -10°C to +10°C with a cycling rate of 12 h. Then the wet sieve residue using a 150 µm mesh was determined. The results are summarized in table 6.

**Table 6:**

| | C2 | 7 | 8 | 9 | 10 | 11 |
|---|---|---|---|---|---|---|
| Wet sieve residue [%]¹⁾ | 0.03 | < 0.01 | < 0.01 | < 0.01 | < 0.01 | < 0.01 |
| D₅₀ [µm] | 1.7 | 1.4 | 1.6 | 1.4 | 1.7 | 1.9 |
| D₉₀ [µm] | 4.3 | 3.4 | 4.1 | 3.3 | 4.6 | 4.9 |

### Example 9:

37.8 parts by weight of water were charged to a vessel followed by the addition of 2.1 parts by weight of surfactant 1, 0.55 parts by weight of surfactant 7, 9.2 parts by weight of glycerol, 0.36 parts by weight of defoamer, 0.03 parts by weight of biocide, 7.6 parts by weight of premix 3, 18.7 parts by weight of colorant slurry and 19.2 parts by weight of the aqueous thickener solution. The mixture was homogenized by stirring with a dissolver disc (φ = 60 mm) at 600 rpm for at least 1 h at 35°C until metalaxyl was completely dissolved (determined by measuring turbidity of the liquid phase or visually). Then 4.4 parts by weight of premix 4 were added followed by neutralization of the mixture with aqueous NaOH. The mixture was warmed to 35°C and stirred with a dissolver disc (φ = 60 mm) at 600 rpm for further 1 h.

The thus obtained formulation was divided into 2 samples, which were stored at for 7 day at 20°C. Then the formulations were analyzed with regard wet sieve residue. The results are summarized in table 7:

### Comparative Example 3:

7.6 parts by weight of premix 3 and 4.4 parts by weight of premix 4 were mixed, warmed to 35°C and stirred at 600 rpm for 1 h. Then 18.7 parts by weight of colorant slurry, 19.2 parts by weight of the aqueous thickener solution, 2.1 parts by weight of surfactant 1, 9.2 parts by weight of glycerol, 0.55 parts by weight of surfactant 7, 0.36 parts by weight of defoamer, 0.03 parts by weight of biocide 37.8 parts by weight of water were added. The mixture was stirred at 500 with a dissolver disc (φ = 60 mm) rpm for 1 h at 35°C.

The thus obtained formulation was divided into 2 samples, which were stored at for 7 day at 20°C. Then the formulations were analyzed with regard wet sieve residue. The results are summarized in table 7:

**Table 7:**

| Example 9 | Directly | 7 d |
|---|---|---|
| Wet sieve 150 µm [% b.w.] | < 0.01 | < 0.01 |
| Wet sieve 45 µm [% b.w.] | n.d. | < 0.01 |
| | | |

| Comparative example 3 | | |
|---|---|---|
| Wet sieve 150 µm [% b.w.] | 0.02 | 0.01 |
| Wet sieve 45 µm [% b.w.] | n.d. | 0.22 |

### Example 10:

The formulation of example 10 was prepared as described for the formulation of example 9 using premixes 5 and 6 instead of premixes 3 and 4 respectively. The thus obtained formulation was divided into 2 samples, which were stored at for 7 day at 20°C. Then the formulations were analyzed with regard wet sieve residue. The results are summarized in table 8:

### Comparative Example 4:

The formulation of comparative example 4 was prepared as described for the formulation of comparative example 3 using premixes 5 and 6 instead of premixes 3 and 4 respectively. The thus obtained formulation was divided into 2 samples, which were stored at for 7 day at 20°C. Then the formulations were analyzed with regard wet sieve residue. The results are summarized in table 8:

**Table 8:**

| Example 10 | Directly | 7 d |
|---|---|---|
| Wet sieve 150 µm [% b.w.] | < 0.01 | < 0.01 |
| Wet sieve 45 µm [% b.w.] | n.d. | < 0.01 |
| | | |

| Comparative example 4 | | |
|---|---|---|
| Wet sieve 150 µm [% b.w.] | < 0.01 | < 0.01 |
| Wet sieve 45 µm [% b.w.] | n.d. | 0.07 |

## Claims

1. A method for producing an aqueous co-formulation of metalaxyl with at least one further sparingly organic pesticide compound PC having a solubility in water of at most 1 g/l at 20°C and a melting point in the range from 40 to 100°C, which method comprises the following steps:
a) providing an aqueous composition of metalaxyl, wherein at least 95 % of the metalaxyl contained in the aqueous composition is present dissolved in an aqueous phase containing water and at least one surfactant and wherein the concentration of metalaxyl in the aqueous phase is from 0.3 to 10% by weight, based on the weight of the aqueous composition;
b) mixing the aqueous suspension of the organic pesticide compound PC with the aqueous composition of metalaxyl, where the concentration of the organic pesticide PC is from 1 to 50% by weight, based on the weight of the suspension of the organic pesticide PC.

2. The method of claim 1, where step a) comprises providing an aqueous suspension of metalaxyl containing water and the at least one surfactant and treating the aqueous suspension, until metalaxyl is present to at least 95% in dissolved form.

3. The method of any one of the preceding claims, where the surfactant comprises at least one anionic surfactant having at least one sulfate, sulfonate, phosphonate or phosphate group.

4. The method of claim 3, where the anionic surfactant comprises at least one selected from the group consisting of the salts of alkylphenol ether sulfates, the salts of polyarylphenol ether sulfates, the salts of alkylphenol ether phosphates, the salts of polyarylphenol ether phosphates, and the salts of oligomers having a plurality of arylsulfonic acid groups.

5. The method of claim 4, where the anionic surfactant comprises at least one oligomer, selected from the group consisting of the salts of the sulfates of ethoxylated di- or tristyrylphenol and the salts of the phosphates of ethoxylated di- or tristyrylphenol.

6. The method of any one of the preceding claims, where the surfactant further comprises at least one further surfactant selected from the group consisting of non-ionic emulsifiers and graft or comb polymers having a plurality of poly-(C₂-C₄-alkyleneoxide) groups.

7. The method of any one of the preceding claims, where the total amount of surfactant in the aqueous composition is from 0.5 to 20% by weight, based on the total weight of the aqueous composition of step a).

8. The method of any one of the preceding claims, where the aqueous composition of metalaxyl further contains at least one aliphatic alcohol having at least one OH group, where the amount of the aliphatic alcohol is from 1 to 30% by weight, based on the total weight of the aqueous composition of step a).

9. The method of any one of the preceding claims, where the aqueous suspension of the organic pesticide compound PC is used in such an amount that the weight ratio of metalaxyl to the further organic pesticide compound PC is from 0.2:1 to 5:1.

10. The method of any of the preceding claims, where the aqueous composition of metalaxyl comprises at least on thickener, in particular at least one polysaccharide based thickener, prior to the mixing step b).

11. The method of any one of the preceding claims, where the organic pesticide compound PC is selected from the group consisting of pyraclostrobin, imazalil, dodemorph acetate, pyrimethanil, difenoconazole, ipconazole, trifloxystrobin, fenoxanil, carboxin, metrafenone and acetamiprid.

12. The method of claim 11, where the organic pesticide compound PC is pyraclostrobin.

13. The method of any one of the preceding claims, where the aqueous composition of metalaxyl contains at least one further organic pesticide compound PC* having a melting point above 100°C and having a water-solubility of at most 5 g/l at 20°C.

14. The method of claim 13, where the further pesticide compound PC* is selected from the group consisting of triticonazole, fluxapyroxad, boscalid, metconazole, dimethomorph, prochloraz, thiophanate-methyl, iprodione, epoxiconazole, fenpropimorph, chlorothalonil, fludioxonil, prothioconazole, tebuconazole, propiconazole, thiram, metiram, dithianon, mancozeb, dimoxystrobine, ametoctradin, fipronil, rynaxypyr, thiametoxam, clothianidin, thiacloprid, imidacloprid and dinotefuran.

15. The method of any one of the preceding claims, where in the aqueous co-formulation
a) the concentration of metalaxyl is from 0.2 to 5 % by weight based on the total weight of the co-formulation,
b) the concentration of the low melting pesticide compound PC is from 0.2 to 15 % by weight based on the total weight of the co-formulation, and
c) the concentration of the at least one surfactant is from 0.5 to 20 % by weight based on the total weight of the co-formulation.

## Patentansprüche

1. Verfahren zur Herstellung einer wässrigen Co-Formulierung von Metalaxyl mit mindestens einer weiteren mäßig organischen Pestizidverbindung PC mit einer Löslichkeit in Wasser von maximal 1 g/l bei 20°C und einem Schmelzpunkt im Bereich von 40 bis 100°C, wobei das Verfahren die folgenden Schritte umfasst:
a) die Bereitstellung einer wässrigen Zusammensetzung von Metalaxyl, wobei mindestens 95% des in der wässrigen Zusammensetzung enthaltenen Metalaxyls gelöst in einer Wasser und mindestens ein Tensid enthaltenden wässrigen Phase vorliegt und wobei die Konzentration von Metalaxyl in der wässrigen Phase 0,3 bis 10 Gew.-%, bezogen auf das Gewicht der wässrigen Zusammensetzung, beträgt,
b) das Mischen der wässrigen Suspension der organischen Pestizidverbindung PC mit der wässrigen Zusammensetzung von Metalaxyl, wobei die Konzentration des organischen Pestizids PC 1 bis 50 Gew.-%, bezogen auf das Gewicht der Suspension des organischen Pestizids PC, beträgt.

2. Verfahren nach Anspruch 1, wobei Schritt a) die Bereitstellung einer Wasser und das mindestens eine Tensid enthaltenden wässrigen Suspension von Metalaxyl und das Behandeln der wässrigen Suspension bis Metalaxyl zu mindestens 95% in gelöster Form vorliegt, umfasst.

3. Verfahren nach einem der vorhergehenden Ansprüche, wobei das Tensid mindestens ein anionisches Tensid mit mindestens einer Sulfat-, Sulfonat-, Phosphonat- oder Phosphatgruppe umfasst.

4. Verfahren nach Anspruch 3, wobei das anionische Tensid mindestens eine aus der aus Salzen von Alkylphenolethersulfaten, Salzen von Polyarylphenolethersulfaten, Salzen von Alkylphenoletherphosphaten, Salzen von Polyarylphenoletherphosphaten und Salzen von Oligomeren mit einer Vielzahl von Arylsulfonsäuregruppen bestehenden Gruppe ausgewählte Komponente umfasst.

5. Verfahren nach Anspruch 4, wobei das anionische Tensid mindestens ein aus der aus Salzen der Sulfate von ethoxyliertem Di- oder Tristyrylphenol und Salzen der Phosphate von ethoxyliertem Di- oder Tristyrylphenol bestehenden Gruppe ausgewähltes Oligomer umfasst.

6. Verfahren nach einem der vorhergehenden Ansprüche, wobei das Tensid weiterhin mindestens ein weiteres aus der aus nichtionischen Emulgatoren und Pfropf- oder Kammpolymeren mit einer Vielzahl von Poly-(C₂-C₄-alkylenoixd)gruppen bestehenden Gruppe ausgewähltes Tensid umfasst.

7. Verfahren nach einem der vorhergehenden Ansprüche, wobei die Gesamtmenge an Tensid in der wässrigen Zusammensetzung 0,5 bis 20 Gew.-%, bezogen auf das Gesamtgewicht der wässrigen Zusammensetzung von Schritt a), beträgt.

8. Verfahren nach einem der vorhergehenden Ansprüche, wobei die wässrige Zusammensetzung von Metalaxyl weiterhin mindestens einen aliphatischen Alkohol mit mindestens einer OH-Gruppe enthält, wobei die Menge des aliphatischen Alkohols 1 bis 30 Gew.-%, bezogen auf das Gesamtgewicht der wässrigen Zusammensetzung von Schritt a), beträgt.

9. Verfahren nach einem der vorhergehenden Ansprüche, wobei die wässrige Suspension der organischen Pestizidverbindung PC in einer solchen Menge eingesetzt wird, dass das Gewichtsverhältnis von Metalaxyl zu der weiteren organischen Pestizidverbindung PC 0,2:1 bis 5:1 beträgt.

10. Verfahren nach einem der vorhergehenden Ansprüche, wobei die wässrige Zusammensetzung von Metalaxyl vor dem Mischschritt b) mindestens ein Verdickungsmittel, insbesondere mindestens ein Verdickungsmittel auf Polysaccharidbasis, umfasst.

11. Verfahren nach einem der vorhergehenden Ansprüche, wobei die organische Pestizidverbindung PC aus der Pyraclostrobin, Imazalil, Dodemorphacetat, Pyrimethanil, Difenoconazol, Ipconazol, Trifloxystrobin, Fenoxanil, Carboxin, Metrafenon und Acetamiprid bestehenden Gruppe ausgewählt ist.

12. Verfahren nach Anspruch 11, wobei es sich bei der organischen Pestizidverbindung PC um Pyraclostrobin handelt.

13. Verfahren nach einem der vorhergehenden Ansprüche, wobei die wässrige Zusammensetzung von Metalaxyl mindestens eine weitere organische Pestizidverbindung PC* mit einem Schmelzpunkt von über 100°C und mit einer Löslichkeit in Wasser von maximal 5 g/l bei 20°C enthält.

14. Verfahren nach Anspruch 13, wobei die weitere Pestizidverbindung PC* aus der aus Triticonazol, Fluxapyroxad, Boscalid, Metconazol, Dimethomorph, Prochloraz, Thiophanat-methyl, Iprodion, Epoxiconazol, Fenpropimorph, Chlorothalonil, Fludioxonil, Prothioconazol, Tebuconazol, Propiconazl, Thiram, Metiram, Dithianon, Mancozeb, Dimoxystrobin, Ametoctradin, Fipronil, Rynaxypyr, Thiametoxam, Clothianidin, Thiacloprid, Imidacloprid und Dinotefuran bestehenden Gruppe ausgewählt ist.

15. Verfahren nach einem der vorhergehenden Ansprüche, wobei in der wässrigen Co-Formulierung
a) die Konzentration von Metalaxyl 0,2 bis 5 Gew.-%, bezogen auf das Gesamtgewicht der Co-Formulierung, beträgt,
b) die Konzentration der Pestizidverbindung PC mit niedrigem Schmelzpunkt 0,2 bis 15 Gew.-%, bezogen auf das Gesamtgewicht der Co-Formulierung, beträgt, und
c) die Konzentration des mindestens einen Tensids 0,5 bis 20 Gew.-%, bezogen auf das Gesamtgewicht der Co-Formulierung, beträgt.

## Revendications

1. Procédé pour la production d'une co-formulation aqueuse de métalaxyl avec au moins un composé pesticide organique modérément supplémentaire PC possédant une solubilité dans l'eau d'au plus 1 g/l à 20 °C et un point de fusion dans la plage de 40 à 100 °C, lequel procédé comprend les étapes suivantes :
a) mise à disposition d'une composition aqueuse de métalaxyl, au moins 95 % du métalaxyl contenu dans la composition aqueuse étant présents dissous dans une phase aqueuse contenant de l'eau et au moins un tensioactif et la concentration de métalaxyl dans la phase aqueuse étant de 0,3 à 10 % en poids, sur la base du poids de la composition aqueuse ;
b) mélange de la suspension aqueuse du composé pesticide organique PC avec la composition aqueuse de métalaxyl, dans lequel la concentration du pesticide organique PC est de 1 à 50 % en poids, sur la base du poids de la suspension du pesticide organique PC.

2. Procédé selon la revendication 1, dans lequel l'étape a) comprend la mise à disposition d'une suspension aqueuse de métalaxyl contenant de l'eau et l'au moins un tensioactif et le traitement de la suspension aqueuse, jusqu'à ce que le métalaxyl soit présent à raison d'au moins 95 % sous forme dissoute.

3. Procédé selon l'une quelconque des revendications précédentes, dans lequel le tensioactif comprend au moins un tensioactif anionique possédant au moins un groupe sulfate, sulfonate, phosphonate ou phosphate.

4. Procédé selon la revendication 3, dans lequel le tensioactif anionique comprend au moins l'un choisi dans le groupe constitué par les sels de sulfates d'éther d'alkylphénol, les sels de sulfates d'éther de polyarylphénol, les sels de phosphates d'éther d'alkylphénol, les sels de phosphates d'éther de polyarylphénol, et les sels d'oligomères possédant une pluralité de groupes acide arylsulfonique.

5. Procédé selon la revendication 4, le tensioactif anionique comprenant au moins un oligomère, choisi dans le groupe constitué par les sels des sulfates de distyrylphénol ou tristyrylphénol éthoxylé et les sels des phosphates de distyrylphénol ou tristyrylphénol éthoxylé.

6. Procédé selon l'une quelconque des revendications précédentes, dans lequel le tensioactif comprend en outre au moins un tensioactif supplémentaire choisi dans le groupe constitué par des émulsifiants non ioniques et des polymères greffés ou en peigne possédant une pluralité de groupes poly-(C₂-₄-oxyde d'alkylène) .

7. Procédé selon l'une quelconque des revendications précédentes, dans lequel la quantité totale de tensioactif dans la composition aqueuse est de 0,5 à 20 % en poids, sur la base du poids total de la composition aqueuse de l'étape a).

8. Procédé selon l'une quelconque des revendications précédentes, dans lequel la composition aqueuse de métalaxyl contient en outre au moins un alcool aliphatique possédant au moins un groupe OH, dans lequel la quantité de l'alcool aliphatique est de 1 à 30 % en poids, sur la base du poids total de la composition aqueuse de l'étape a).

9. Procédé selon l'une quelconque des revendications précédentes, dans lequel la suspension aqueuse du composé pesticide organique PC est utilisée en une telle quantité que le rapport en poids de métalaxyl sur le composé pesticide organique supplémentaire PC est de 0,2 : 1 à 5 : 1.

10. Procédé selon l'une quelconque des revendications précédentes, dans lequel la composition aqueuse de métalaxyl comprend au moins un épaississant, en particulier au moins un épaississant à base de polysaccharide, avant l'étape de mélange b).

11. Procédé selon l'une quelconque des revendications précédentes, le composé pesticide organique PC étant choisi dans le groupe constitué par la pyraclostrobine, l'imazalil, l'acétate de dodémorph, le pyriméthanil, le difénoconazole, l'ipconazole, la trifloxystrobine, le fénoxanil, la carboxine, la metrafénone et l'acétamiprid.

12. Procédé selon la revendication 11, dans lequel le composé pesticide organique PC est la pyraclostrobine.

13. Procédé selon l'une quelconque des revendications précédentes, dans lequel la composition aqueuse de métalaxyl contient au moins un composé pesticide organique supplémentaire PC* possédant un point de fusion supérieur à 100 °C et possédant une solubilité dans l'eau d'au plus 5 g/l à 20 °C.

14. Procédé selon la revendication 13, dans lequel le composé pesticide supplémentaire PC* est choisi dans le groupe constitué par le triticonazole, le fluxapyroxad, le boscalid, le metconazole, le diméthomorph, le prochloraz, le thiophanate-méthyl, l'iprodione, l'époxiconazole, le fenpropimorph, le chlorothalonil, le fludioxonil, le prothioconazole, le tébuconazole, le propiconazole, le thiram, le métiram, le dithianon, le mancozeb, la dimoxystrobine, l'amétoctradine, le fipronil, le rynaxypyr, le thiamétoxam, la clothianidine, le thiacloprid, l'imidacloprid et le dinotéfuran.

15. Procédé selon l'une quelconque des revendications précédentes, dans lequel, dans la co-formulation aqueuse
a) la concentration de métalaxyl est de 0,2 à 5 % en poids sur la base du poids total de la co-formulation,
b) la concentration du composé pesticide PC à bas point de fusion est de 0,2 à 15 % en poids sur la base du poids total de la co-formulation, et
c) la concentration de l'au moins un tensioactif est de 0,5 à 20 % en poids sur la base du poids total de la co-formulation.
